# EUROPEAN PATENT APPLICATION

(11) **EP 3 095 923 A1**
(43) Date of publication of application: **23.11.2016**
(21) Application number: 14879232.8
(22) Date of filing: 16.01.2014
(51) Int. Cl.: E02F 9/00, E02F 9/08

(54) **HANDRAIL FOR CONSTRUCTION EQUIPMENT**

(71) Applicant: Volvo Construction Equipment AB, 631 85 Eskilstuna (SE)
(72) Inventor: PARK, Jin-Suk, Changwon-si Gyeongsangnam-do 642-370 (KR); KIM, Seok-Won, Busan 608-794 (KR)
(74) Representative: Gulde & Partner
(86) International application number: PCT/KR2014/000484
(87) International publication number: WO 2015/108214

(57) **Abstract**

The present invention relates to a handrail for construction equipment that is installed at the upper frame of construction equipment such as an excavator. The handrail for construction equipment, according to the present invention, comprises: a handle bar; a support bar inserted into and coupled to the tip end of the handle bar; and a first reinforcing tube coupled to the coupling portion between the handle bar and the support bar. Therefore, the handrail for construction equipment, according to the present invention, can prevent vibration load and stress, which are transferred from construction equipment, from being concentrated on the coupling portion between the handle bar and the support bar.

## Description

### TECHNICAL FIELD

The present disclosure relates to a handrail for a construction machine disposed on an upper frame of the construction machine, such as an excavator. More particularly, the present disclosure relates to a handrail in which a joint between a support bar and a handlebar is easily reinforced using a reinforcing tube, such that stress applied to the handrail is distributed. This can consequently prevent the handrail from being damaged.

### BACKGROUND ART

In general, construction machines, such as excavators, are exposed to large workloads and large vibration loads due to working environments thereof. In particular, components of construction machines subjected to excessive vibration loads are frequently fractured due to fatigue caused by vibration loads accumulated during operations. Thus, ensuring high resistance to vibration loads first has to be considered when designing components of construction machines.

A handrail serves as a conventional handle or a protector when an operator moves around on an upper frame to check or repair components, such as an engine. Some structures, such as handrails, among components of construction machines, are designed to provide safety to operators. Such structures must be designed to have sufficient durability.

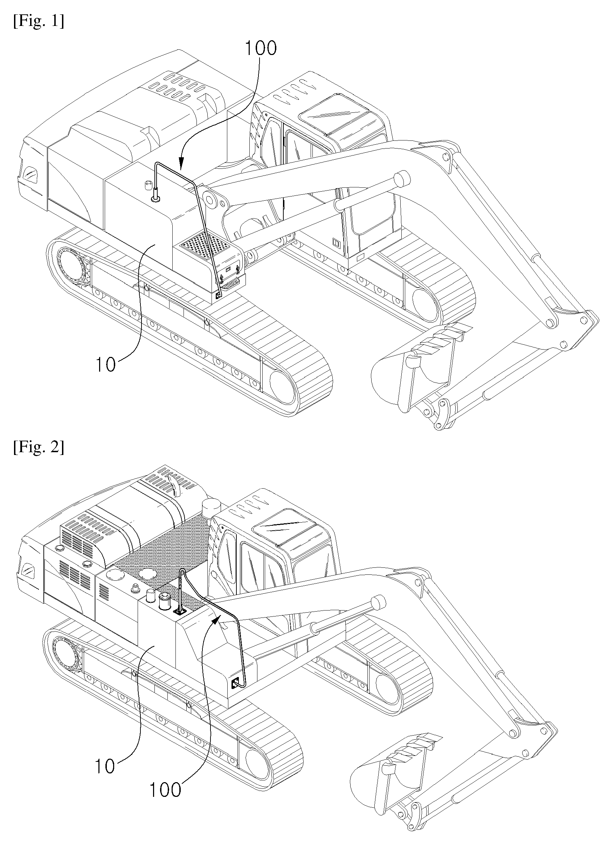

FIG. 1 illustrates a handrail 100 disposed on a construction machine, in particular, an excavator. In typical cases, the handrail 100 is erected on a side portion of the front of an upper frame 10. Thus, when the excavator is working, large vibration loads are transferred to the handrail 100. The handrail 100 may be fatigued by the vibration loads, frequently causing the most fragile portion thereof to be fractured. This is because the conventional handrail 100 is directly exposed to excessive workloads while the construction machine is working.

In particular, when vibration loads are transferred from the construction machine to a joint between a handlebar and a support bar fixed to the side portion of the upper frame, the handrail moves at the frequency of the vibration loads. Over time, the vibrations of the handrail are gradually amplified. Thus, the danger of fracture of the joint between the handlebar and the support bar increases, which is problematic.

Korean Patent Application Publication No. 10-2008-0047045, titled *"FOLDER TYPE HANDRAIL FOR CONSTRUCTION EQUIPMENT,"* discloses an approach to reducing vibration loads transferred to a handrail. However, Korean Patent Application Publication No. 10-2008-0047045 has drawbacks, such as a complicated structure, difficulty in construction, and high fabrication costs.

### DISCLOSURE

### Technical Problem

Accordingly, the present disclosure has been made in consideration of the above problems occurring in the related art, and the present disclosure has the following objects.

First, the present disclosure is intended to prevent vibration loads and stresses transferred from a construction machine from being concentrated on a joint between a handlebar and a support bar.

Second, the present disclosure is intended to prevent a handrail from being damaged by obtaining higher resistance to vibration loads.

### Technical Solution

According to an aspect of the present disclosure, a handrail for a construction machine may include: a handlebar; a support bar including a first support bar coupled to a top surface of a plate fixed to an upper frame of a construction machine and a second support bar integrally extending from the first support bar, the outer diameter of the second support bar being smaller than the outer diameter of the first support bar, the second support bar being fitted into a first end portion of the handlebar; and a first reinforcing tube into which the handle bar is fitted, a bottom end of the first reinforcing tube coupled to a top end of the first support bar, and a top end of the first reinforcing tube coupled to the handle bar.

In the handrail for a construction machine, a reinforcing rib may be formed on a side surface of the first support bar, and a bottom end of the reinforcing rib may be coupled to a top surface of the plate.

In the handrail for a construction machine, the outer diameter of the first support bar may be equal to the outer diameter of the first reinforcing tube.

According to another aspect of the present disclosure, provided is a method of fabricating a handrail for a construction machine. The method may include: fitting a first reinforcing tube around a handlebar; forming a support bar including a first support bar coupled to a top surface of a plate to be fixed to an upper frame of a construction machine and a second support bar integrally formed with the first support bar, the diameter of the second support bar being smaller than the diameter of the first support bar, and fitting the second bar into a first end portion of the handlebar; welding a bottom end of the handlebar to a top end of the first support bar; welding a bottom end of the first reinforcing tube to the top end of the first support bar; and welding the top end of the first reinforcing tube to the handlebar.

According to a further aspect of the present disclosure, a handrail for a construction machine may include: a handlebar; a support bar including a first support bar coupled to the top surface of a plate to be fixed to an upper frame of a construction machine, the first support bar being fitted into a first end portion of the handlebar; and a plurality of reinforcing tubes including first to Nth reinforcing tubes. The first to Nth reinforcing tubes are fitted sequentially around the handlebar such that the reinforcing tubes overlap sequentially, entire bottom ends of the reinforcing tubes being coupled to the top surface of the plate, the inner diameters of the reinforcing tubes gradually increasing from the first reinforcing tube to the Nth reinforcing tube, the lengths of the reinforcing tubes gradually decreasing from the first reinforcing tube to the Nth reinforcing tube, and a top end of the Nth reinforcing tube being coupled to the (N-1) th reinforcing tube.

### Advantageous Effects

The handrail for a construction machine according to the present disclosure can easily reinforce a joint between a support bar and a handlebar using a reinforcing tube, thereby obtaining the following effects:

First, it is possible to prevent vibration loads and stresses transferred from a construction machine from being concentrated on a joint between a handlebar and a support bar.

Second, it is possible to prevent the handrail from being damaged by obtaining higher resistance to vibration loads.

### DESCRIPTION OF DRAWINGS

FIG. 1 is a perspective view illustrating a conventional handrail disposed on a construction machine;
FIG. 2 illustrates a handrail for a construction machine according to a first exemplary embodiment;
FIG. 3 is a perspective view and a partially enlarged view of the handrail shown in FIG. 2;
FIG. 4 is a front elevation view illustrating a method of fabricating the handrail for a construction machine shown in FIG. 2;
FIG. 5 is a perspective view illustrating a handrail according to another exemplary embodiment; and
FIG. 6 is a perspective view illustrating a handrail for a construction machine according to a further exemplary embodiment.

### BEST MODE

Hereinafter, reference will be made to a handrail for a construction machine according to exemplary embodiments in detail in conjunction with the accompanying drawings. FIG. 2 to FIG. 4 illustrate a handrail 100 for a construction machine according to a first exemplary embodiment.

The present disclosure is intended to prevent vibration loads and stresses transferred from a construction machine from being concentrated on a joint between a handlebar and a support bar. The handrail 100 for the construction machine according to the present embodiment includes a handlebar 120, a support bar 140, and a first reinforcing tube 160. The support bar 140 includes a first support bar 144 coupled to the top surface of a plate 142 fixed to an upper frame 10 of the construction machine and a second support bar 146 integrally extending from the first support bar 144, the diameter of the second support bar 146 being smaller than the diameter of the first support bar 144. The second support bar 146 is fitted into a first end portion of the handlebar 120. The handlebar 120 is fitted into the first reinforcing tube 160, the bottom end of which is coupled to the top end of the first support bar 144, and the top end of which is coupled to the handlebar 120.

Referring to FIG. 1, a handrail for a construction machine is used when an operator needs to move around on the upper frame 10 of the construction machine to repair an engine and so on or for other work. The opposite ends of the handrail are coupled to the upper frame 10 of the construction machine to ensure the safety of the operator. Specifically, the handlebar 120 is a part that the operator can hold with a hand while working on the upper frame 10. The handlebar 120 can be fabricated by forming a pipe into a shape suitable to be installed on a working place on the upper frame 10. That is, the handlebar 120 is bent into a desirable shape, and both ends of the handlebar 120 are fixed to the upper frame 10 such that the handlebar 120 can be located on the working place on the upper frame 10.

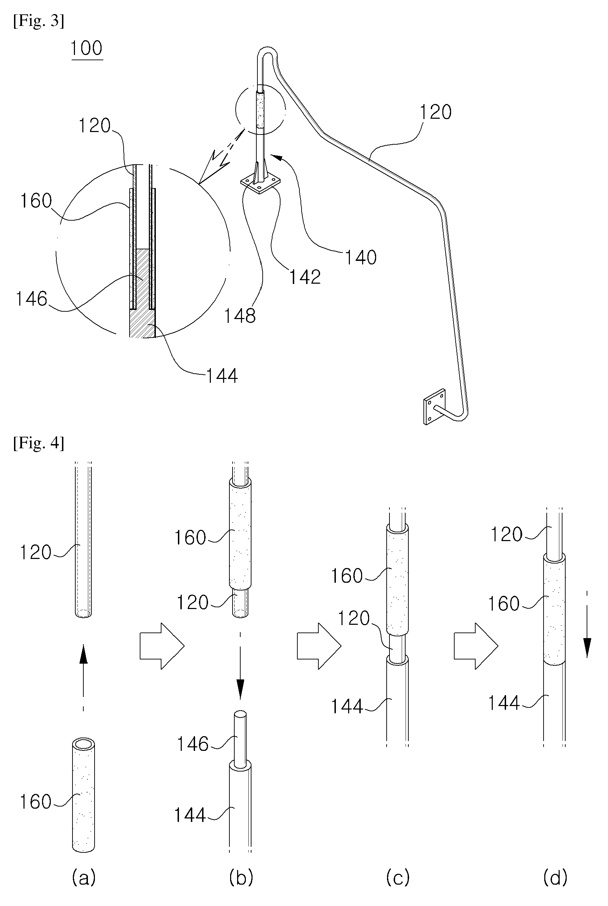

Referring to FIG. 2 and FIG. 3, the opposite end portions of the handrail 100 are coupled to the upper frame 10 of the construction machine, and the second support bar 146 is fitted into a first end portion of the handlebar 120.

The support bar 140 is a part coupled to the upper frame 10 to support the handlebar 120. In the support bar 140, the plate 142, the first support bar 144, and the second bar 146 are arranged sequentially from the bottom. The first support bar 144 and the second support bar 146 may be integrally formed. The first support bar 144 and the second support bar 146 may have the shape of two short bars having different diameters, the diameter of the first support bar 144 being greater than the diameter of the second support bar 146. The second support bar 146 is fitted into the first end portion of the handlebar 120, and the first end of the handlebar 120 extends downwardly to be connected to the top end of the first support bar 144.

In addition, a plurality of reinforcing ribs 148 may be formed on side surfaces of the first support bar 144, with the bottom ends of the reinforcing ribs 148 being coupled to the top surface of the plate 142. The reinforcing ribs 148 are connected between the plate 142 and the first support bar 144 to prevent the first support bar 144 on the plate 142 from being inclined.

The first reinforcing tube 160 is a part reinforcing the joint between the handlebar 120 and the support bar 140. The first reinforcing tube 160 is coupled to the outer portion of the handlebar 120. The length of the first reinforcing tube 160 may be longer than the length of the second support bar 146. The first reinforcing tube 160 may be fabricated such that the outer diameter thereof is equal to the outer diameter of the first support bar 144.

Next, reference will be made to a method of fabricating the handrail 100 for the construction machine according to the present embodiment. The method of fabricating the handrail 100 for the construction machine according to the present embodiment includes: fitting the first reinforcing tube 160 around the handlebar 120; forming the support bar 140 including the first support bar 144 coupled to the top surface of the plate 142 to be fixed to the upper frame 10 of the construction machine and the second support bar 146 integrally formed with the first support bar 144, the diameter of the second support bar 146 being smaller than the diameter of the first support bar 144, and fitting the second bar 146 into the first end portion of the handlebar 120; welding the bottom end of the handlebar 120 to the top end of the first support bar 144; welding the bottom end of the first reinforcing tube 160 to the top end of the first support bar 144; and welding the top end of the first reinforcing tube 160 to the handlebar 120.

Referring to FIG. 4, first, the first end of the handlebar 120 is fitted into the first reinforcing tube 160 (a). The fitting may be made such that the handlebar 120 travels through the first reinforcing tube 160, whereby the first end portion of the handlebar 120 is exposed externally. Afterwards, the second support bar 146 of the support bar 140 is fitted into the first end portion of the handlebar 120 around which the first reinforcing tube 160 has been fitted (b). Subsequently, the bottom end of the handlebar 120 around which the first reinforcing tube 160 has been fitted is welded to the top end of the first support bar 144 of the support bar 140 (c). Afterwards, the first reinforcing tube 160 is moved downwardly, and the bottom end of the first reinforcing tube 160 is welded to the top end of the first support bar 144 (d). Finally, the top end of the first reinforcing tube 160 having the bottom end thereof fixed to the first support bar 144 is welded to the outer portion of the handlebar 120. The handlebar 120 is situated within the first reinforcing tube 160 coupled thereto as described above, and the second support bar 146 is situated within the handlebar 120. Here, the top end of the second support bar 146 is positioned below the top end of the first reinforcing tube 160.

Next, reference will be made to a handrail 100 for a construction machine according to a second exemplary embodiment. The handrail 100 for the construction machine according to the present embodiment includes: the handlebar 120; the support bar 140; and a plurality of reinforcing tubes including first to Nth reinforcing tubes. The support bar 140 has the first support bar 144 coupled to the top surface of the plate 142 fixed to an upper frame 10 of the construction machine. The first support bar 144 is fitted into a first end portion of the handlebar 120. The first to Nth reinforcing tubes are fitted sequentially around the handlebar 120 such that the reinforcing tubes overlap sequentially on the handlebar 120. The entire bottom ends of the reinforcing tubes are coupled to the top surface of the plate 142. The inner diameters of the reinforcing tubes gradually increase from the first reinforcing tube to the Nth reinforcing tube, while the lengths of the reinforcing tubes gradually decrease from the first reinforcing tube to the Nth reinforcing tube. The top end of the Nth reinforcing tube is coupled to the (N-1)th reinforcing tube.

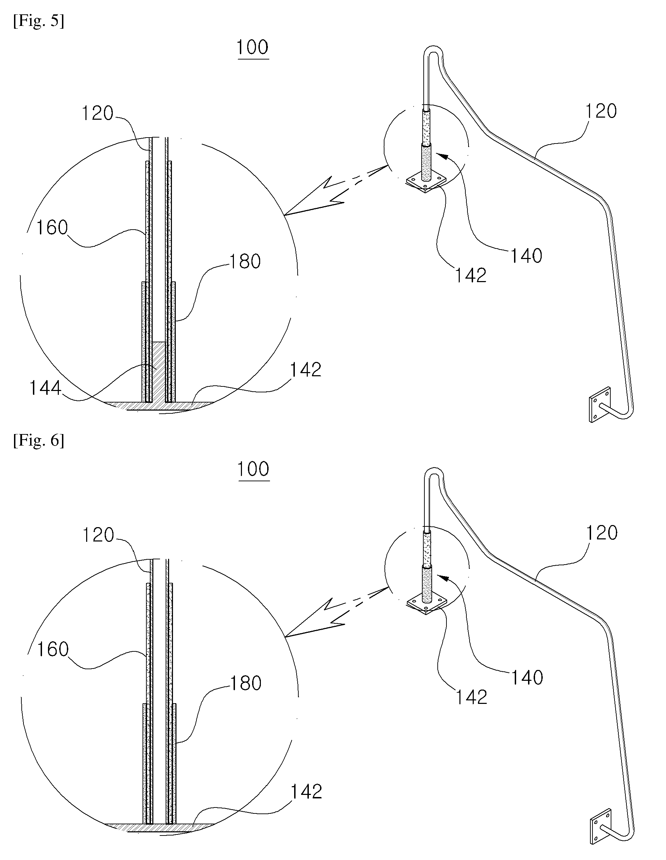

Hereinafter, with reference to FIG. 5, a description of elements of the present embodiment different from those of the first embodiment will mainly be given. The first support bar 144 is fitted into the first end portion of the handlebar 120. The first reinforcing tube 160 is coupled to the outer portion of the handlebar 120. The length of the first reinforcing tube 160 may be greater than the length of the first support bar 144. The second reinforcing tube 180 is coupled to the outer portion of the first reinforcing tube 160, with the length thereof being shorter than the length of the first reinforcing tube 160.

The reinforcing tubes are coupled in the following sequence. First, the first reinforcing tube 160 and the second reinforcing tubes 180 are fitted around the first end portion of the handlebar 120 such that the first and second reinforcing tubes 160 and 180 overlap sequentially around the handlebar 120. Here, the fitting may be made such that the handlebar travels through the first reinforcing tube 160 and the second reinforcing tubes 180, whereby the first end portion of the handlebar 120 is exposed externally. Afterwards, the first support bar 144 is fitted into the first end of the handlebar 120, and then the first end of the handlebar 120 is welded to the top surface of the plate 142. Subsequently, the bottom end of the first reinforcing tube 160 is welded to the top surface of the plate 142, and the top end of the first reinforcing tube 160 is welded to the outer circumferential surface of the handlebar 120. Afterwards, the bottom of the second reinforcing tube 180 is welded to the top surface of the plate 142, and the top end of the second reinforcing tube 180 is welded to the outer circumferential surface of the first reinforcing tube 160. Here, the top end of the second reinforcing tube 180 is positioned below the top end of the first reinforcing tube 160.

In addition, a further reinforcing tube may be added around the second reinforcing tube 180 as required such that the reinforcing tubes overlap sequentially. Here, the Nth additional reinforcing tube must be prepared to be fitted around the (N-1) th reinforcing tube before the bottom end of the handlebar 120 is welded to the top surface of the plate 142. Since the top end of the Nth reinforcing tube is positioned below the top end of the (N-1)th reinforcing tube, the overall outer shape of the reinforcing tubes coupled to the top surface of the plate 142 becomes gradually more slender in the bottom-to-top direction.

As illustrated in FIG. 6, a further exemplary embodiment is different from the second embodiment, in that the handlebar 120 is welded to the plate 142 without the first support bar 144 of the support bar 140. Specifically, the first support bar 144 fitted into the handlebar 120 is omitted. N number of reinforcing tubes may be fitted around the handlebar 120 such that the reinforcing tubes overlap sequentially, as in the second embodiment.

As set forth above, the handrails 100 according to exemplary embodiments can prevent stresses from being concentrated on the joint between the handlebar 120 and the support bar 140 due to the cross-section area thereof gradually changing, differently from the conventional handrail 100. In addition, adjustment in the length of the reinforcing tube or the use of the plurality reinforcing tubes can distribute stresses that would otherwise be concentrated on the joint between the handlebar 120 and the support bar 140. This can consequently prevent the joint between the handlebar 120 and the support bar 140 from being fractured by concentrated stresses. In addition, it is possible to easily reinforce the joint between the handlebar 120 and the support bar 140 using the reinforcing tube(s), and even after the joint is reinforced, only weight is increased by a little. The reinforcement of the handrail 100 using the reinforcing tube(s) as described above can be performed not only on one side of the handlebar 120 but also on both sides of the handlebar 120.

## Claims

1. A handrail for a construction machine, comprising
a handlebar;
a support bar comprising a first support bar coupled to a top surface of a plate fixed to an upper frame of a construction machine and a second support bar integrally extending from the first support bar, an outer diameter of the second support bar being smaller than an outer diameter of the first support bar, the second support bar being fitted into a first end portion of the handlebar; and
a first reinforcing tube into which the handle bar is fitted, a bottom end of the first reinforcing tube coupled to a top end of the first support bar, and a top end of the first reinforcing tube coupled to the handle bar.

2. The handrail of claim 1, wherein a reinforcing rib is formed on a side surface of the first support bar, and a bottom end of the reinforcing rib is coupled to a top surface of the plate.

3. The handrail of claim 1, wherein the outer diameter of the first support bar is equal to an outer diameter of the first reinforcing tube.

4. A method of fabricating a handrail for a construction machine, the method comprising:
fitting a first reinforcing tube around a handlebar;
forming a support bar including a first support bar coupled to a top surface of a plate to be fixed to an upper frame of a construction machine and a second support bar integrally formed with the first support bar, a diameter of the second support bar being smaller than a diameter of the first support bar, and fitting the second bar into a first end portion of the handlebar;
welding a bottom end of the handlebar to a top end of the first support bar;
welding a bottom end of the first reinforcing tube to the top end of the first support bar; and
welding a top end of the first reinforcing tube to the handlebar.

5. A handrail for a construction machine, comprising:
a handlebar;
a support bar comprising a first support bar coupled to a top surface of a plate to be fixed to an upper frame of a construction machine, the first support bar being fitted into a first end portion of the handlebar; and
a plurality of reinforcing tubes comprising first to Nth reinforcing tubes,
wherein the first to Nth reinforcing tubes are fitted sequentially around the handlebar such that the reinforcing tubes overlap sequentially, entire bottom ends of the reinforcing tubes being coupled to the top surface of the plate, inner diameters of the reinforcing tubes gradually increasing from the first reinforcing tube to the Nth reinforcing tube, lengths of the reinforcing tubes gradually decreasing from the first reinforcing tube to the Nth reinforcing tube, and a top end of the Nth reinforcing tube being coupled to the (N-1)th reinforcing tube.

6. A handrail for a construction machine, comprising:
a handlebar;
a plate to be fixed to an upper frame of a construction machine; and
a plurality of reinforcing tubes comprising first to Nth reinforcing tubes,
wherein the first to Nth reinforcing tubes are fitted sequentially around the handlebar such that the reinforcing tubes overlap sequentially, entire bottom ends of the reinforcing tubes being coupled to a top surface of the plate, inner diameters of the reinforcing tubes gradually increasing from the first reinforcing tube to the Nth reinforcing tube, lengths of the reinforcing tubes gradually decreasing from the first reinforcing tube to the Nth reinforcing tube, and a top end of the Nth reinforcing tube being coupled to the (N-1)th reinforcing tube.
